# EUROPEAN PATENT APPLICATION

(11) **EP 0 637 461 A1**
(43) Date of publication of application: **08.02.1995**
(21) Application number: 93306101.2
(22) Date of filing: 02.08.1993
(51) Int. Cl.: B01D 53/94, B01J 23/56, B01J 23/46

(54) **Precious metal catalysts for emissions**

(71) Applicant: PCP CONSULTING AND RESEARCH, Inc., Princeton, New Jersey 08540 (US)
(72) Inventor: Ganguli, Partha S.,Dr., Princeton, New Jersey 08540 (US); Sundaresan, Sankaran, Mercerville, New Jersey 08619 (US)
(74) Representative: Deans, Michael John Percy

(57) **Abstract**

Three-way precious metal catalysts used for treatment of automobile exhaust gas or gas emissions from stationary combustion sources, are enhanced by using an oxygen-ion conducting material such as yttria-stabilized-zirconia (YSZ) as the support material. Support material surface area is 20-300 m²/gm, and useful concentrations of yttria on zirconia support are 1.0-50 wt.%. Useful concentrations of platinum or palladium on the support material is 0.01-2 wt.%, and the weight ratio of rhodium/platinum or rhodium/palladium is 0.01;0.1. YSZ-supported catalysts can achieve a substantially higher level of pollutants (CO, NOₓ, H₂ and hydrocarbons) removal, without requiring increased loading of expensive precious active metals on the support material. A further development enhances chemical activity and thermal stability by utilizing a composite oxygen-ion conducting support material composed of zirconia stabilized by yttria, calcia, magnesia or scandia, and at least 40 wt.% inert support material such as alumina or titania. The catalysts can be supported by composites of yttria-stabilized-zirconia (YSZ) and alumina, and contain 0.01-3.0 wt.% total active metals, which may consist of major metals platinum or palladium and minor metals rhodium or ruthenium dispersed on the support.

## Description

This invention pertains to a three-way supported catalyst for the treatment of gas emissions from mobile or stationary sources. A particular, though not exclusive, application of the invention is to treatment of gas emissions from fuel combustion sources. It will be shown how the invention may be employed for simultaneous oxidation of carbon monoxide, hydrogen and hydrocarbon compounds and reduction of nitrogen oxides present in gas emissions from mobile or stationary fuel combustion sources, such as automotive exhaust gases or power plant gas emissions.

Supported metal catalysts are widely used for oxidation and reduction of pollutants present in gas exhausts or emissions from mobile or stationary internal combustion power generation sources. One approach to solving this gas emission problem by simultaneous oxidation of carbon monoxide and hydrocarbons and reduction of NO_{X} compounds in exhaust gases is passing such gases through a single bed catalytic converter. The three-way catalyst used in the converter typically consists of platinum (Pt), rhodium (Rh) and sometimes palladium (Pd) deposited on a conventional γ-alumina (Al₂O₃) support material, which may be in either pellet or a monolithic form.

The existing precious metal catalysts for treatment of automotive exhaust gases typically uses alumina and sometimes ceria-stabilized γ-alumina or lanthanum oxide-stabilized γ-alumina as a support material. It is believed that the addition of ceria may promote the performance of the three-way catalyst by facilitating the water-gas shift reaction, by acting as an oxygen storage unit, and by stabilizing the gamma-alumina support against loss of surface area. But none of the known catalyst supports used for automobile exhaust gases treatment have provided any oxygen-ion conducting property. We have now found that use of an oxygen-ion conducting catalyst support material greatly improved the pollutant removal capability of previous metal catalysts without the need for increase in the catalyst active precious metal content, which makes the catalyst too costly.

This invention enables us to provide a highly active three-way precious metal catalyst having an oxygen-ion conducting support material and which is useful for effective removal of pollutants present in combustion gas emissions from mobile and stationary fuel combustion sources, such as from automobile engine exhaust gases. A three-way catalyst is one that provides three material surfaces consisting of two active metals and an oxygen-ion conducting support material for oxidation reactions with a pollutant gas, particularly a gas containing carbon monoxide, hydrogen and hydrocarbon compounds.

In one aspect of this invention the catalyst contains two active precious metals such as platinum and rhodium or palladium and rhodium dispersed on an oxygen-ion conducting support material, such as yttria-stabilized-zirconia (YSZ). If desired, the addition of cerium oxide or lanthanum oxide can also be used as a stabilizer for the support material. The support material has a surface area of at least about 20 m²/gm, and preferably 40-300 m²/gm. The concentration of yttria (Y₂O₃) on yttria-stabilized zirconia (YSZ) used as the support material can be in the range of 1.0 to 50 wt.%, and is preferably 6-20 wt.% of the support material. Alternatively, a conventional support material such as γ-alumina coated with yttria-stabilized-zirconia (YSZ) can also be used. The concentration of yttria-stabilized zirconia (YSZ) used as a coating on the conventional support material should be at least 0.1 wt.%, and is preferably 5-80 wt.% of the support material.

High surface area support material of yttria-stabilized-zirconia (YSZ) can be prepared by a sol-gel technique using alkoxides of the elements, or by a microemulsion techniques using aqueous solutions of yttrium, zirconium and ammonium salts. Platinum or palladium active metal concentrations on the support material may vary between 0.01 to 2.0 wt.% of the catalyst. The rhodium/platinum (Rh/Pt) weight ratio or rhodium/palladium (Rh/Pd) weight ratio may vary between 0.01 to 0.1, so as to provide an active metals total concentration of 0.01 to 2.2 wt.%. The active metals platinum, palladium and rhodium can be deposited on the YSZ support material surface by using a known aqueous impregnation procedure. Useful shapes for the catalyst can include beads, extrudates, pellets, and monolithic molded shapes, such as honeycomb structures.

Because of the use of an oxygen-ion conducting support material in a three-way precious metal catalyst according to this invention, the catalyst is much more active towards simultaneous oxidation of CO, H₂ and hydrocarbons, and reduction of NOₓ than known catalysts utilizing conventional support material such as γ-alumina alone. This new catalyst material can advantageously achieve a substantially higher level of pollutants removal from automobile exhaust gases, or from gas emissions from stationary fuel combustion exhaust sources, without requiring an undesirable increase in the concentration or loading of active precious metals on the catalyst support material. This improved catalyst is useful for removal of known pollutants from exhaust gases from various fuel combustion processes, such as gas emission and pollutants from internal combustion engines, including gasoline and diesel automotive engines and gas turbines. Such gas pollutants also occur from stationary fuel combustion in power plants and from waste incineration installations, and from catalytic combustion of chemical effluents. Catalytic action using this three-way precious metal catalyst material on exhaust gases results in converting the pollutant compounds to essentially CO₂ N₂ and water vapor.

The practice of the aspect of the invention discussed above will now be further described and will include reference to Examples 1-3 given below.

Supported active metal catalysts are widely used for various oxidation reactions, with the catalysts used for automotive engine exhaust gas after-treatment being a prime example. When known inert materials such as silica or alumina are used as catalyst supports, the oxidation reactions proceed only on the surface of the active metals or multimetallic crystallites, and these reactions can proceed on the active metal surface even in the absence of the support. However, it has now been unexpectedly found that when one utilizes as a catalyst support material metal oxides exhibiting appreciable oxygen-ion mobilities at the gas reaction temperatures, for example, oxygen-ion conducting electrolytes such as yttria-stabilized-zirconia (YSZ) as supports, two additional pathways for producing effective catalytic oxidation reactions with exhaust gas pollutants are advantageously made possible.

As a first pathway, the oxidation reactions can occur on the surface of the oxygen-ion conducting support material even in the absence of the active metal crystallites. The reaction rate is usually small when compared to reactions on the active metal surface at the reaction temperatures of interest in combustion exhaust gas after-treatment processes.

The second pathway for oxidation reactions, which can be referred to as interfacial oxidation, involves oxygen transfer at the three-phase interface between the metal crystallites, the support material and the gas phase. If the rates of the interfacial oxygen transfer reactions are comparable to the rates of the heterogeneous oxidation reaction occurring on the metal crystallites, then the catalyst active metal dispersed on the oxygen-ion conducting support would exhibit an appreciably larger activity towards the oxidation reaction than does the same catalyst active metal dispersed on an inert support material. For the same amount of active metal loading in a catalyst, the smaller the crystallite size the larger will be the surface area for interfacial oxidation reactions.

Catalyst Preparation Method: The high surface area oxygen-ion conducting yttria-stabilized-zirconia (YSZ) support materials can be prepared by either a sol-gel technique using alkoxides of the elements, or by a microemulsion technique using salt solutions. Useful concentration of yttria (Y₂O₃) on zirconia support can be within the range of 1 to 50 wt.%, and is preferably 6-20 wt.% of the support. Use of YSZ-coated support material such as γ-alumina can serve the same purpose. High surface area supports of YSZ-coated γ-alumina can be prepared by microemulsion technique using solutions of yttrium, zirconium, aluminum, and ammonium salts. Surface area of the support material may vary between 20 to 300 m²/gm. Active metals such as platinum (Pt) and rhodium (Rh) can be deposited on the YSZ support surface by usual impregnation procedure using aqueous solutions of hydrochloroplatinic acid and rhodium chloride. The prepared catalyst is reduced by contact with hydrogen and then calcined. To prepare a commercial catalytic converter for automobile internal combustion engine exhaust gas treatment, a ceramic honey-comb support structure can be coated with YSZ-support material, which in turn can be deposited with active precious metals such as platinum (Pt), and rhodium (Rh) or palladium (Pd) and rhodium (Rd) in overall or total concentration of 0.01 to 2.2 wt.% of the catalyst.

The practice of the invention will be further described by the following examples, which present the catalyst composition and reaction conditions used and pollutant conversion data results obtained, and should not be construed as limiting the scope of this invention.

Our experimental work, as presented in the Examples below, has shown that YSZ-supported active metal catalysts are much more active towards pollutants of CO, H₂, NOₓ and hydrocarbons removal than those catalysts having active metal support on γ-alumina alone. This superior activity of YSZ-supported catalysts can be realized even at low loading of the active metals on the support material. In the experiments, yttria-stabilized-zirconia (YSZ) powder having 45 m²/gm surface area and containing 12 wt.% yttria (Y₂O₃), and γ-alumina having 90 m²/gm surface area were used as support materials. Both the YSZ and γ-alumina supports were deposited with the active metals platinum (Pt) and rhodium (Rh) by usual impregnation procedures using aqueous solutions of hydrochloroplatinic acid and rhodium chloride. The metal impregnated supports were then dried, treated with hydrogen and calcined.

Reaction kinetic experiments were conducted with these prepared catalysts samples in a small continuous flow reactor at reaction temperatures of 425°C, 400°C and 300°C using a gas mixture simulating automobile exhaust gases, containing 2 V% CO, 0.7 V% H₂, 10 V% CO₂, 0.2 V% NO, 0.1 V% propylene hydrocarbon, 2.5 V% H₂0, and the remainder being nitrogen.

### EXAMPLE 1

Catalysts #5 and #11 had 0.02 wt. % platinum (Pt) and Rh/Pt ratio of 0.05 deposited on supports of γ-alumina and yttria-stabilized-zirconia (YSZ), respectively. The amount of catalyst used in each reactor was 0.01 gm. Total gas mixture flow rate was 200 ml/min and the stoichiometric amount of oxygen was used. Reaction results are presented in the following Table 1, in which HC conversion represents propylene hydrocarbon conversion.

**Table 1**

| | Catalyst | |
|---|---|---|
| | No. 5 | No. 11 |
| Support Material | γ-alumina | YSZ |
| Reaction Temp., °C | 425 | 425 |
| CO Conversion, V% | 28.1 | 93.5 |
| H₂ Conversion, V% | 41.9 | 100 |
| NO Conversion, V% | 92 | >95 |
| HC Conversion, V% | >90 | >90 |

It is noted that the percent conversion of CO, H₂ and NO at 425°C reaction temperature is substantially greater for the No. 11 catalyst having the YSZ-support than for the γ-alumina supported catalyst, while the hydrocarbon conversion was unchanged at >90 V%.

### EXAMPLE 2

Catalysts #1 and #7 used in these experiments had 0.1 wt. % platinum (Pt) and Rh/Pt ratio of 0.05 deposited on γ-alumina and on YSZ support materials, respectively. Amount of catalyst used in each reactor was again 0.01 gm. Total gas mixture flow rate was 100 ml/min and the stoichiometric amount of oxygen was used. Results are presented in the following Table 2.

**Table 2**

| | Catalyst | |
|---|---|---|
| | No. 1 | No. 7 |
| Support Material | γ-alumina | YSZ |
| Reaction Temp., °C | 400 | 400 |
| CO Conversion, V% | 0 | 56.6 |
| H₂ conversion, V% | 36.1 | 72.3 |
| NO Conversion, V% | 84.3 | >95 |
| HC Conversion, V% | >90 | >90 |

It is seen that the percent conversion of CO, H₂ and NO at 400°C reaction temperature and the lower gas flow rate of 100 ml/min is significantly greater for the YSZ-supported catalyst No. 7, and the hydrocarbon conversion exceeded 90 V% for each catalyst and its support material.

### EXAMPLE 3

Catalysts #5 and #11, as described above in Example 1, were used in this experiment. The amount of catalyst used in each reactor was increased to 0.1 gm. Feed gas mixture composition was changed slightly to 1.8 V% CO, 0.7 V% H₂, 0.1 V% propylene, 10 V% CO₂ and the remainder was nitrogen. Total gas mixture flow rate was 100 ml.min, the oxygen used was slightly above the stoichiometric amount, and the reaction temperature was reduced to 300°C. Results are presented in the following Table 3.

**Table 3**

| | Catalyst | |
|---|---|---|
| | No. 5 | No. 11 |
| Support Material | γ-alumina | YSZ |
| Reaction Temp., °C | 300 | 300 |
| CO Conversion, V% | 16.6 | 98.8 |
| H₂ Conversion, V% | 42.9 | 100 |
| HC Conversion, V% | 0 | 100 |

It is again seen that the conversion of CO, H₂ and hydrocarbons is significantly greater for the catalyst No. 11 having YSZ-support than for the catalyst No. 5 having γ-alumina support.

Thus, the above Examples 1-3 demonstrate that YSZ-supported catalysts are far superior to γ-alumina supported catalysts containing the same amount of active metals in terms of conversion of gas emission pollutants CO, H₂, NO and hydrocarbons. The superiority of YSZ-supported catalysts is evident even at low loading of active metals of 0.02 wt.% platinum (Pt) on the support, and at low reaction temperatures of 300°C.

Attention will now be directed to a further aspect of the invention which is concerned with an improved three-way precious metal catalyst arising from a further development of the invention. It pertains particularly to such catalysts in which the oxygen-ion conducting support material is provided by a composite of an oxygen-ion conducting material and an inert support material on which at least two chemically active metals are dispersed, for simultaneous oxidation of CO, H₂ and hydrocarbon compounds and reduction of nitrogen oxides present in gas emissions. A particular application is to fuel combustion gases. The oxygen-ion conducting support material can be zirconia stabilized by yttria, calcia, magnesia, or scandia and the inert material can be alumina or titania, so as to provide improved thermal stability and increased surface area and activity for the catalyst.

As already noted supported metal catalysts are widely used for oxidation and reduction of pollutants present in exhaust gas emissions from mobile or stationary combustion power generation sources, such as automotive exhaust gases or power plant stack gas emissions. One approach to solving this gas emission pollutant problem by simultaneous oxidation of carbon monoxide and hydrocarbons and reduction of NOₓ compounds in exhaust gases is passing such gases through a single bed catalytic converter. Three-way catalysts used in such catalytic converters typically consist of platinum (Pt), rhodium (Rh) and sometimes palladium (Pd) deposited on a conventional γ-alumina (Al₂O₃) support material, which may be in either pellet or a monolithic form.

The existing precious metal catalysts used for treatment of automotive exhaust gas emissions typically use γ-alumina and sometimes ceria-stabilized and/or lanthanum-oxide-stabilized γ-alumina as a support material. The addition of ceria may promote the performance of the catalyst by facilitating a water-gas shift reaction, by acting as an oxygen storage unit, and by stabilizing the gamma-alumina support against loss of surface area at high temperatures. Also, catalyst support materials used in catalysts for automotive exhaust gas emissions treatment can advantageously have an oxygen-ion conducting property, as has been disclosed above. We have observed that such catalysts having yttria-stabilized-zirconia (YSZ) supports used alone provide desired thermal stability and moderate useful active life for the catalyst. However, to provide catalysts having an improved substrate or support material particularly for use in automotive catalytic converters requiring long active useful life, the support material must have high thermal stability and surface area exceeding about 20 m²/gm after extended thermal aging or service use, because in automotive service the catalysts can be subjected to prolonged temperatures as high as 1000°C.

We have now discovered that improved stable catalysts utilizing an oxygen-ion conducting catalyst support material can be advantageously made using a composite of an oxygen-ion conducting material and an inert support material, such as composites of yttria-stabilized-zirconia (YSZ) and at least 40 wt. % inert support material such as alumina or titania. Such composite support materials provide for improved precious metal catalysts having enhanced pollutant removal capability and high thermal stability, without the need for using high percentages of the oxygen-ion conducting support material or active precious metals content of the catalyst. These three-way composite catalysts utilizing e.g. Pt/Rh active metals on YSZ-Al₂O₃ support material are significantly superior to catalysts using Pt/Rh active metals deposited on conventional supports such as γ-alumina stabilized with cerium oxide or lanthanum oxide, and provide improved thermal stability and longer catalyst life.

The further aspect of the present invention enables us to provide improved stable three-way precious metal catalysts utilizing a composite of an oxygen-ion conducting support material and an inert support material, and having small amounts of at least two chemically active precious metals dispersed on the support. Such composite support materials are an intimate molecular mixture of the oxygen-ion conducting component and the inert material component, so that such composites are basically different from an oxygen-ion material being merely coated onto an inert support material. These catalysts provide effective removal of pollutants present in fuel combustion gas emissions from mobile and stationary sources, such as from automotive engine exhaust gases.

The catalyst composite support material having oxygen-ion conducting properties has surface area at least about 20 m²/gm after extensive aging in air at 1000°C for four hours. The oxygen-ion conducting support material can be zirconia (ZrO₂) stabilized by adding appropriate amounts of yttria, calcia, magnesia or scandia or mixtures thereof, and the inert support material is at least about 40 wt.% of a conventional catalyst support material such as alumina or titania. The active precious metals added to the catalyst composite support material include at least one major active metal and at least one minor active metal. Useful major active metals are platinum (Pt), palladium (Pd), or a combination thereof; useful minor active metals are rhodium (Rh), ruthenium (Ru), or a combination thereof. The total active major and minor metals content should be in the range of 0.01-3.0 wt. percent. The weight ratio of the active minor metal to the active major metal should be in the range of 0.01-0.5.

The catalyst support material is usually formed by a composite of 5-60 wt.% yttria-stabilized-zirconia (YSZ) and 40-95 wt.% gamma alumina. The two active metals are usually platinum (Pt) and rhodium (Rh), which are provided on the catalyst composite support in a total active metals concentration of 0.01 to 3.0 wt. percent of the catalyst, and in a weight ratio for the rhodium/platinum in the range between 0.01/1 and 0.5/1.

The fundamental concept underlying this further development is that when oxygen-ion conducting materials are used as supports for precious metals catalysts, a new class of chemical reactions are triggered at the three-phase interface between the precious metal crystallites, gas phase and the support material, and that these reactions can appreciably augment the usual rates of the desired chemical reactions. Because of using the oxygen-ion conducting composite as supports, the resulting catalysts have high stability and long useful life, as well as enhanced activity towards pollutants removal from fuel combustion gases.

The further aspect of the invention is concerned not only with a three-way supported catalyst for treatment of gas emissions from mobile or stationary sources but also with a method of preparing high surface area yttria-stabilized-zirconia-alumina composite powder useful as catalyst support material and using a sol-gel technique, and a method of preparing a yttria-stabilized-zirconia-alumina composite powder using a microemulsion procedure.

The practice of the invention in regard to the further development that has been under discussion will now be described in more detail including reference to Examples 4-6 given below.

The three-way precious metals catalysts embodying this further aspect of the invention may preferably contain an oxygen-ion conducting composite support material which is formed by 5-60 wt.% yttria-stabilized-zirconia (YSZ) and 40-95 wt.% gamma alumina and an active major metal including either platinum or palladium combined with an active minor metal including either rhodium or ruthenium dispersed on the support material. If desired, cerium oxide or lanthanum oxide up to 20 wt.% of the support material can be added as an additional thermal stabilizer. The composite support material has a surface area after thermal aging in air at 1000°C for four hours of at least about 20 m²/gm, and preferably has 40-300 m²/gm surface area. The amount of zirconia (Zr0₂) utilized in the composite support material is 4.5-45 wt.% and is preferably 8-40 wt.%; the concentration of yttria (Y₂O₃) used in the composite support material should be 0.5-15 wt.%, and is preferably 2-10 wt.% The concentration of the yttria-stabilized zirconia (YSZ) on the YSZ-Al₂O₃ composite support material should be 5-60 wt.% and is preferably 10-50 wt.% of the support. The concentration of alumina (Al₂O₃) in the composite support should be in the range of 40-95 wt.% , and is preferably 50-90 wt.% of the support. The total active metal concentrations of either platinum or palladium combined with either rhodium or ruthenium dispersed on the support material should be within the range of 0.01 to 3.0 wt.% of the catalyst, and is preferably 0.05-2.5 wt.%. The weight ratio of rhodium/platinum (Rh/Pt) or rhodium/palladium (Rh/Pd) may vary from 0.01/1 to 0.5/1, and is preferably in the range of 0.02/1 to 0.4/1.

The active metals platinum, palladium, rhodium and ruthenium can be deposited on the composite support material by using a known aqueous solution impregnation procedure. Useful shapes for the catalyst can include beads, extrudates, pellets, and monolithic molded shapes, such as honeycomb structures.

High surface area composite support material of yttria-stabilized-zirconia and γ-alumina can be prepared either by a sol-gel technique using alkoxides of the elements, or by a microemulsion technique using aqueous solutions of yttrium, zirconium, aluminum and ammonium salts which are described below.

Because of utilizing a composite of an oxygen-ion conducting material and an inert material as support for improved three-way precious metal catalysts according to this invention, the resulting catalyst is much more thermally stable and active towards simultaneous oxidation of CO, H₂ and hydrocarbons, and reduction of NOₓ than known catalysts having supports of conventional support materials, such as ceria and lanthanum oxide stabilized alumina alone. This new more stable catalyst advantageously achieves a substantially higher level of pollutants removal from fuel combustion gases such as from automotive exhaust gases, or from stationary combustion sources, without requiring an undesirable increase in the concentration or loading of precious active metals on the catalyst support material. Because of good thermal stability and high surface area for the composite support of oxygen-ion conducting material and insert material, superior catalytic activity can be maintained for longer useful life than for catalysts using YSZ support alone.

This new improved catalyst is advantageous for removal of known pollutants from exhaust gases from various fuel combustion processes, such as gas emissions and pollutants from internal combustion engines, including gasoline and diesel automotive engines and gas turbines. Such gas pollutants also occur from stationary fuel combustion in power plants and from waste material incineration installations, and catalytic combustion of chemical effluents. Catalytic action using this catalyst on fuel combustion exhaust gases results in converting pollutant compounds to essentially non-polluting CO₂, N₂ and water vapor.

Catalyst Substrate Preparation Methods: There will be described methods for preparation of Y₂O₃-stabilized - ZrO₂-Al₂O₃ composite powders by a sol-gel technique or a microemulsion procedure. For the sol-gel technique, zirconium-butoxide-butanol liquid and solutions of aluminum isopropoxide and yttrium isopropoxide in toluene are mixed thoroughly by a stirrer in excess anhydrous alcohol such as anhydrous ethanol at room temperature (20°C) for 1-3 hours. The concentration of salts in the resulting solution should be ≦ 5 wt.%. The solution is heated to 30-100°C and preferably to about 40°C, while a flow of water-saturated air is maintained above the stirred solution to supply reactant water for hydrolysis reactions to form composite particles in suspension. Water can be added at a very low rate by some other means. After 10-24 hours, small amounts of deionized water is added to the stirred solution periodically e.g. every three hours to maintain a low concentration of water to complete hydrolysis reactions. After a total run of 30 to 60 hours, the operation is stopped, the slurry is evaporated at moderate temperature, and the resulting powder is dried at 150-200°C for 1-3 hours. The dried powder is then calcined in air at 500°C for 1-4 hours and at 950°C for 1-3 hours. The resulting yttria-zirconia-alumina composite powders have composition of 0.5-15 wt.% Y₂O₃, 4.5-45 wt.% ZrO₂, and 40-95 wt.% Al₂O₃, and have high surface area exceeding 40 m²/gm and usually 100-600 m²/gm, and have uniform composition and sufficient thermal stability for an effective catalyst material.

Alternatively, the composite support material powder can be prepared by using a microemulsion procedure, for producing high surface area yttria-stabilized-zirconia-alumina composite catalyst support. In this procedure, appropriate amounts of yttrium chloride, zirconium oxychloride and aluminum chloride are dissolved in distilled water to yield 10 to 20 wt.% salt in solution. Next, xylene and a surfactant such as Triton x-100 is mixed with this aqueous solution by stirring until clear, so that the salt solution:xylene:surfactant in the weight ratio of 1:2:2 form a microemulsion. Then, 3 mole percent ammonium hydroxide solution, xylene and the surfactant are mixed by stirring until clear, so that the ammonium hydroxide:xylene:surfactant in the weight ratio of 1:3.5:3.5 form a microemulsion.

The salt microemulsion is mixed by stirring with basic microemulsion in weight ratio of about 2:1, in order to form very fine precipitates of composites of Y₂O₃-ZrO₂-Al₂O₃. The mixed slurry is distilled to remove xylene and water, so that the product settles as a precipitate to the bottom of the vessel, with the surfactant on top. The surfactant is separated from the precipitate. The precipitate is vacuum filtered and washed with xylene and water. The resulting composite powder is dried at 100-200°C temperature for 2 to 4 hours, and then calcined at 500°C-1000°C for 1-4 hours to produce a composite support material having high thermal stability and surface area of at least 20 m²/gm.

This composite powder support material prepared by either the sol-gel or the microemulsion method is then impregnated with at least two active precious metals including a major metal platinum or palladium and a minor metal rhodium or ruthenium, to produce a three-way catalyst utilizing a composite oxygen-ion conducting support material.

The practice of the further aspect of the invention will be further described referring to the following Examples, which should not be construed as limiting in scope.

### EXAMPLE 4

Tests were made to determine thermal stability of the composite YSZ-Al₂O₃ support powders. The composite powders were artificially aged by thermal treatment in air at 1000°C for four hours to mimic automotive service for 50,000 miles, and the surface area of the treated powders were measured. The aged treated powders had high surface areas exceeding 40 m²/gm and usually up to 200 m²/gm and prove the enhanced thermal stability of the catalyst support structure.

Accelerated thermal aging at 1000°C in air for 8-12 hours (to mimic automotive service for 100,000 miles or more) is used as a standard test by manufacturers of three-way catalysts to mimic the conditions encountered by catalysts in actual automotive exhaust gas use over a life of about 100,000 miles or more. A commercially available yttria-stabilized-zirconia (YSZ) support containing 8-12 wt.% yttria on zirconia after thermally aging at 1000°C in air for 12 hours, has a surface area of 12 m²/gm, which area is considered too low for an effective automotive exhaust catalyst. A YSZ support material, prepared by our sol-gel or micro-emulsion techniques, after thermal aging at 1000°C in air for 12 hours, also provided low surface area of about 12.2 m²/gm. But when we prepare a YSZ-Al₂O₃ composite support powder by using either our sol-gel or micro-emulsion technique, our lab results showed the surface area after thermal aging (at 1000°C, in air for 12 hours) were in the range of 60-100 m²/gm, provided that the percent Al₂O₃ in the YSZ-Al₂O₃ composite is at least 40 wt.%. These results show that catalysts utilizing composite supports prepared as described above have substantially increased surface area even after similar thermal aging, thus indicating significantly improved thermal stability and useful life for the catalyst.

### EXAMPLE 5

Composite Y₂O₃-ZrO₂-Al₂O₃ support powders of different compositions were prepared by using a sol-gel technique. Samples of these composite powders were thermally treated at 1000°C for four hours in air to simulate artificial aging treatment after 50,000 mile use in an automobile exhaust. Composition and surface areas for these powders are presented in the following Table 4.

**TABLE 4**

| Composite Support | Surface Area of Treated Powder, m²/gm |
|---|---|
| YSZ-75 mole% Al₂O₃ | 183 |
| YSZ-45 mole% Al₂O₃ | 110 |
| YSZ-25 mole% Al₂O₃ | 43.5 |

It is noted that after the thermal aging treatment made to simulate extended automotive exhaust gas usage, surface areas of these composite powders containing YSZ and 45-75 mole % Al₂O₃ were 110-183 m²/gm, which is great enough to provide effective and stable catalysts.

### EXAMPLE 6

A catalyst performance comparison was made between a commercially available automotive exhaust catalyst and a sample catalyst made in accordance with this invention. The commercial catalyst (Toyota Camry, 1989) designated WGIT was 1 inch diameter x 1 inch length Cordierite monolith coated with 30 wt.% alumina powder impregnated with 0.85 wt.% Pt and 0.25 wt.% Rh active metals, and thermally aged at 1000°C for four hours in air. The catalyst having a composite support made according to this invention and designated CM4T was 1 inch diameter x this invention and designated CM4T was 1 inch diameter x 1 inch long Cordierite monolith coated with 30 wt.% composite powder containing YSZ-Al₂O₃ impregnated with 0.85 wt.% Pt and 0.25 wt.% Rh active metals, and thermally aged at 1000°C in air for four hours. The feed gas used was a simulated automotive exhaust gas containing 2.0 V% CO, 0.5 V% NO, 0.1 V% C₃H₆, 0.7 V% H₂, and 10.0 V% CO₂, with stoichiometric or above stoichiometric amount of oxygen, moisture, S0₂, and remainder being nitrogen. The feed gas was passed over each sample catalyst in a small reactor at space velocity of 40,000 hr⁻¹. The test results are shown in Tables 5 and 6 below for the commercial catalyst (WGIT) containing Pt/Rh/Al₂O₃-La₂O₃-CeO₂ and the composite catalyst (CM4T) containing Pt/Rh/YSZ-Al₂O₃, respectively.

**TABLE 5**

| Test Results for Commercial Catalyst WGIT | | | | | |
|---|---|---|---|---|---|
| Inlet Gas Temp. °C | Oxygen Conc.* | CO Conv., V% | NO Conv., V% | HC** Conv., V% | H₂ Conv., V% |
| 230 | Ab. st. | 0.0 | 0.0 | 0.0 | 0.0 |
| 260 | Ab. st. | 6.0 | 20 | 6.0 | 11 |
| 290 | Ab. st. | 92 | 100 | 95 | 100 |
| 320 | St. | 97 | 100 | 100 | 100 |
| 320 | Ab. st. | 98.5 | 55 | 100 | 100 |

| | | | | | |
|---|---|---|---|---|---|
| * St. = Stoichiometric Ab. st. = Above stoichiometric | | | | | |
| ** HC = Propylene. | | | | | |

These results in Table 5 show that gas pollutant conversion reactions commence at about 260°C gas temperature and are substantially complete at 320°C

**TABLE 6**

| Test Results for Composite Catalyst CM4T | | | | | |
|---|---|---|---|---|---|
| Inlet Gas Temp. °C | Oxygen Conc.* | CO Conv., V% | NO Conv., V% | HC** Conv., V% | H₂ Conv., V% |
| 160 | St. | 0.0 | 0.0 | 0.0 | 0.0 |
| 170 | At. st. | 1.0 | 18 | 1.0 | 7 |
| 203 | Ab. st. | 79 | 98 | 71 | 100 |
| 223 | Ab. st. | 99 | 98 | 100 | 100 |
| 265 | Ab. st. | 99 | 100 | 100 | 100 |

| | | | | | |
|---|---|---|---|---|---|
| * St. = Stoichiometric Ab. st. = Above stoichiometric | | | | | |
| ** HC = Propylene. | | | | | |

Results in Table 6 show that gas pollutant conversion reactions start at lower temperatures of about 170°C gas temperature and are substantially complete at 223°C temperature.

Comparison of these test results in Tables 5 and 6 show that for the catalyst CM4T utilizing a composite support according to this invention, conversions start and are completed at gas temperatures at least about 80°C lower than those for the commercial WGIT catalyst. Thus, it is considered that the composite PT/Rh/YSZ-Al₂O₃ catalyst outperforms a similar commercial catalyst using conventional support by a significant margin, as equivalent conversions of pollutants are achieved at much lower reaction temperatures.

## Claims

1. A three-way supported precious metal catalyst for treatment of gas emissions from mobile or stationary sources, the catalyst comprising: an oxygen-ion conducting support material provided by a composite of zirconia stabilized by addition of yttria, calcia, magnesia or scandia, and including at least about 40 wt.% inert catalyst support material, said composite support material having surface area at least about 20 m²/gm after thermal aging in air at 1000°C for four hours; and at least two active metals consisting of a major metal platinum (Pt), palladium (Pd), or a combination thereof, combined with a minor metal consisting of rhodium (Rd), ruthenium (Ru), or a combination thereof, all dispersed on said composite support material in total active metals content between about 0.01 and 3.0 wt.% of the catalyst.

2. The catalyst of Claim 1, wherein the amount of zirconia (ZrO₂) in the composite support material is 4.5-45 wt.% of the support.

3. The catalyst of Claim 1, wherein the amount of yttria (Y₂O₃) in the composite support material is in the range of 0.5-15 wt.% of the support.

4. The catalyst of Claim 1, 2 or 3 wherein the amount of the inert support material is 40-95 wt.% of the support.

5. The catalyst of Claim 1, wherein the oxygen-ion conducting composite support material is 5-60 wt.% yttria-stabilized-zirconia (YSZ), with the inert support material being 40-95 wt.% alumina.

6. The catalyst of Claim 5, wherein the amount of zirconia (ZrO₂) is 4.5-45 wt.% and the amount of yttria (Y₂O₃) in the composite support material is in the range of 0.5-15 wt.% of the support.

7. The catalyst of Claim 1, wherein up to 20 wt.% cerium oxide and/or lanthanum oxide is added to the inert support material of the catalyst to act as an additional thermal stabilizer.

8. The catalyst of Claim 1, wherein the composite support material has a surface area of 40-300 m²/gm after said thermal aging.

9. The catalyst of Claim 1, wherein the total concentration of the active metals platinum (Pt) and rhodium (Rh) is in the range of 0.01 to 3.0 wt.%, and the weight ratio of rhodium/platinum (Rh/Pt) is in the range of 0.01/1 to 0.5/1.

10. The catalyst of Claim 1, wherein the total concentration of active major and minor metals is 0.05-2.5 wt.% of the catalyst, and the weight ratio of minor/major active metals is 0.05/1-0.4/1.

11. A three-way supported precious metal catalyst for conversion removal of gas pollutants from mobile or stationary sources, the catalyst comprising: an oxygen-ion conducting support material provided by a composite of 4.5-45 wt.% zirconia (ZrO₂) stabilized by 0.5-15 wt.% yttria (Y₂O₃), and 40-95 wt.% alumina, said composite support material having surface area of 40-300 m²/gm after thermal aging in air at 1000°C for four hours; and two active metals consisting of either platinum and rhodium or palladium and rhodium dispersed on the composite support material in total amount of 0.01 to 3.0 wt.% of the catalyst.

12. A method for preparing high surface area yttria-stabilized-zirconia-alumina composite powder useful as catalyst support materials and using a sol-gel technique, comprising:
a) providing separate solutions of yttrium-alkoxide in a hydrocarbon solvent, zirconium-alkoxide in a hydrocarbon solvent, and aluminum alkoxide in a hydrocarbon solvent; mixing desired amounts of said solutions together at ambient temperature, and stirring the mixture thoroughly;
(b) adding sufficient anhydrous alcohol to said mixed solution to provide less than 10 wt.% salt in the solution;
(c) heating the mixed solution to 25-100°C temperature while maintaining a flow of water-saturated air above the solution for .5-50 (preferably 5-50) hours to provide reactant water for hydrolysis reaction to form suspended composite particles;
(d) adding deionized water to said heated solution to maintain a low concentration of water in the solution during further stirring to complete hydrolysis reactions;
(e) evaporating the resulting slurry mixture to recover the powder, and drying the powder;
(f) calcining the dried powder at 500-1000°C temperature, so as to produce a powder support material having high thermal stability and surface area at least 40 m²/gm.

13. The method of Claim 12, wherein the calcined composite powder mixture contains 0.5-15 wt.% yttria (Y₂O₃), 4.5-45 wt.% zirconia (ZrO₂), and 40-95 wt.% alumina (Al₂O₃).

14. The method of Claim 12, wherein the calcined composite powder has surface area of 40-300 m²/gm.

15. The method of Claim 12, including impregnating the composite powder with active metals platinum and rhodium for a total active metals content in the range of 0.01-3.0 wt.% of the catalyst, the metals having rhodium/platinum weight ratio of 0.01 to 0.5.

16. The method Claim 12, including impregnating the composite powder with active metals palladium and rhodium for a total active metals content in the range of 0.01-3.0 wt.% of the catalyst, and having rhodium/palladium weight ratio of 0.01-0.5.

17. A method for preparing high surface area yttria-stabilized-zirconia-alumina composite powder using a microemulsion procedure, comprising:
(a) dissolving desired stoichiometric amounts of yttrium chloride, zirconium oxychloride and aluminum chloride in distilled water to form a salt solution;
(b) mixing said salt solution with appropriate amounts of a hydrocarbon solvent, and a surfactant to form a microemulsion;
(c) mixing together a hydrocarbon solvent, a surfactant and concentrated ammonium hydroxide solutions to form a basic microemulsion;
(d) mixing the salt microemulsion from step (b) and basic microemulsion from step (c) to yield a precipitate; and
(e) separating the precipitate from the liquid, then drying and calcining the precipitate to yield a YSZ-Al₂O₃ composite powder having high surface area exceeding 40 m²/gm after thermal aging in air at 1000°C for 4 hours.

18. The method of Claim 17, including impregnating the calcined composite powder with active metal platinum and rhodium for a total active metals content in the range of 0.01-3.0 wt.% total active metals and having rhodium/platinum weight ratio in the range of 0.01/1 to 0.5/1.

19. The method of Claim 17, including impregnating the calcined composite powder with active metals palladium and rhodium for a total active metals content in the range of 0.01-3.0 wt.% of the catalyst, and having a rhodium/palladium weight ratio of 0.01-0.5/1.

20. A three-way supported catalyst for treatment of gas emissions from mobile or stationary sources, comprising, an oxygen-ion conducting support material having surface area at least about 20 m²/gm, and two active metals selected from the group consisting of (i) platinum and rhodium and (ii) palladium and rhodium dispersed on the support material in overall amount of 0.01-2.2 wt.% of the catalyst.

21. The catalyst of Claim 20, wherein the oxygen-ion conducting support material is yttria-stabilized-zirconia (YSZ).

22. The catalyst of Claim 21, wherein the percentage of yttria on zirconia is in the range of 1 to 50 wt.% of the support material.

23. The catalyst of Claim 21, wherein the percentage of yttria on zirconia is in the range of 6-20 wt.% of the support material.

24. The catalyst of Claim 20, wherein the support material is a high surface area catalyst support material coated with at least 0.1 wt.% yttria-stabilized-zirconia (YSZ).

25. The catalyst of Claim 24, wherein the percentage of yttria-stabilized-zirconia (YSZ) on the support material ranges from 5 to 80 wt.% of the support material.

26. The catalyst of Claim 20, wherein the concentration of the active metals platinum (Pt) or palladium (Pd) is in the range of 0.01 to 2 wt.% of the catalyst, and Rh/Pt or Rh/Pd weight ratio is in the range of 0.01 to 0.1.

27. The catalyst of Claim 20, wherein cerium oxide or lanthanum oxide is added to the support material to act as a stabilizer material.

28. The catalyst of Claim 20, wherein the support material has a surface area of 40-300 m²/gm.

29. A three-way supported catalyst for treatment of gas emissions from mobile or stationary sources comprising an oxygen-ion conducting support material composed of yttria-stabilized-zirconia (YSZ) and having surface area at least 20 m²/gm, and two active metals selected from the group consisting of (i) platinum and rhodium and (ii) palladium and rhodium dispersed on the support material in overall amount of 0.01 to 2.2 wt.% of the catalyst.

30. The catalyst of Claim 20, wherein the active metals are platinum (Pt) and rhodium (Rh), the concentration of platinum is 0.01 to 2 wt.% of the catalyst, and the Rh/Pt weight ratio varies between 0.01 to 0.1.

31. The catalyst of Claim 20, wherein the active metals are palladium (Pd) and rhodium (Rh), the concentration of palladium is 0.01 to 2.0 wt.% of the catalyst, and the Rh/Pd ratio varies between 0.01 to 0.1.
